# EUROPEAN PATENT SPECIFICATION

(11) **EP 0 901 646 B1**
(45) Date of publication and mention of the grant of the patent: **17.10.2001**
(21) Application number: 97923330.1
(22) Date of filing: 23.05.1997
(51) Int. Cl.: G02B 23/12, G02B 27/01

(54) **IMAGING SYSTEM FOR PROVIDING NIGHT VISION TO PILOTS**
NACHTSICHTBILDSYSTEM FÜR PILOTEN
SYSTEME D'IMAGERIE ASSURANT LA VISION NOCTURNE AUX PILOTES

(30) Priority: 24.05.1996 NL 1003197
(43) Date of publication of application: 17.03.1999
(73) Proprietor: Delft Signaal Optronics B.V, 2624 BD Delft (NL)
(72) Inventor: VERSTEEG, Frits, Johan, NL-3053 HM Rotterdam (NL); INGLETON, Martyn, Minster Sheernes, Kent (GB)
(74) Representative: Van kan, Johan Joseph Hubert, Ir.
(86) International application number: NL9700291
(87) International publication number: WO9745760

(56) References cited:
- EP-A- 0 206 324
- EP-A- 0 576 160
- WO-A-92/16867
- GB-A- 2 290 454
- US-A- 4 761 056

## Description

The invention relates to an imaging system intended for mounting onto a helmet, including:
- at least one image projection group mounted on one side of the helmet,
- optical means coupled to the at least one image projection group, which are provided with a first and a second reflecting element, one of which is running substantially parallel to the head-dividing-plane through the head of the helmet bearer which divides the head of the helmet bearer in a left half and a right half, and
- a visor provided with a reflecting optical element for displaying an image provided by the at least one image projection group to the eye of the helmet bearer at the one side,
in which system a beam originating from the at least one image projection group on its way to the reflecting optical element on the visor travels in a first direction before reflecting from the first reflecting element and travels in a second direction after reflecting from the second reflecting element.

Such an imaging system is used for the helmets of, for example, pilots of civil or military vehicles, like airplanes, helicopters and tanks.

An imaging system, as is known from the European patent specification No. 0 576 160 (GEC-Marconi Ltd.), comprises optical means which are arranged such that beams from an image projection group - which is located at one side of the helmet - are directed towards the reflecting optical element which is located at the other side on the visor and vice versa. Such a configuration suffices for displaying information, for example virtual, often stylized, symbols and pictures on the visor for the purpose of e.g. aiming and guiding of missiles. If use is made of optical means suitable for night vision, a distorted view of the nocturnal reality is obtained, because the images taken from the left side of the head are directed to the right eye and images taken from the right side are directed to the left eye. Therefore the known configuration is unsuited, without the application of complicated electronics, to be used as an imaging system for night vision.

An imaging system as mentioned in the beginning is known from the international patent application No. WO 92/16867 (of the same applicant). Particularly, an imaging system is described therein, which is intended for mounting onto a helmet, and which comprises optical means coupled to an image projection group, which optical means are arranged such that the image obtained at one side by the image projection group are passed on to the eye of the helmet bearer at the same side. The imaging system known from this publication each time needs an expensive holographic optical element in order to realize a necessary special refraction of the beams. In other possible embodiments use is made of a small mirror which is located on the nose, in the head-dividing-plane through the head of the helmet bearer, which divides the head of the helmet bearer in a left half and a right half. A small mirror present at that location is not only inconvenient for the pilot, it also restricts his view. Under certain conditions such a limitation can lead to it not being possible to notice an enemy plane, which could be lifethreatening for the pilot.

The object of the present invention is to provide an imaging system which is compact, which is not provided with a small mirror on the nose which limits view and which is still suitable for night vision.

For this purpose, an imaging system according to the invention has the special arrangement that as viewed in projection on a plane, perpendicular to the head-dividing-plane, the first and second directions are opposed directions and substantially parallel to each other.

An advantage is that the present invention does not necessarily has to use an expensive holographic element. The two reflecting elements which are mostly positionable at the height of the forehead are much less inconveniently and permanently present to the pilot and these almost do not restrict the field of view at all. In particular, the two reflecting elements can be mounted as a so called roof top mirror at the position of the forehead of the helmet bearer. In this way the field of view is not restricted by these elements.

In a preferred embodiment, the reflecting element which runs almost parallel to the forehead of the helmet bearer is mounted on the helmet. While in a special embodiment there of, a mirror is mounted on the inside of the visor and reflects the beams coming from the night vision projection group into the direction of the reflecting element. The advantage achieved eventually is that the imaging system according to the invention may fit efficiently between the helmet and the visor, in order to make the beams obtained from outside the helmet visible for the pilot on the reflecting optical element on the inside of the visor via the space between the helmet and the visor.

Now the present invention and the accompanying other advantages will be explained further by means of the following drawing, in which corresponding components in the various figures have been provided with the same reference numerals. In the drawing:
- Figure 1 shows a frontal view of a helmet without and Figure 2 shows a frontal view of a helmet with a visor with the imaging system according to the invention,

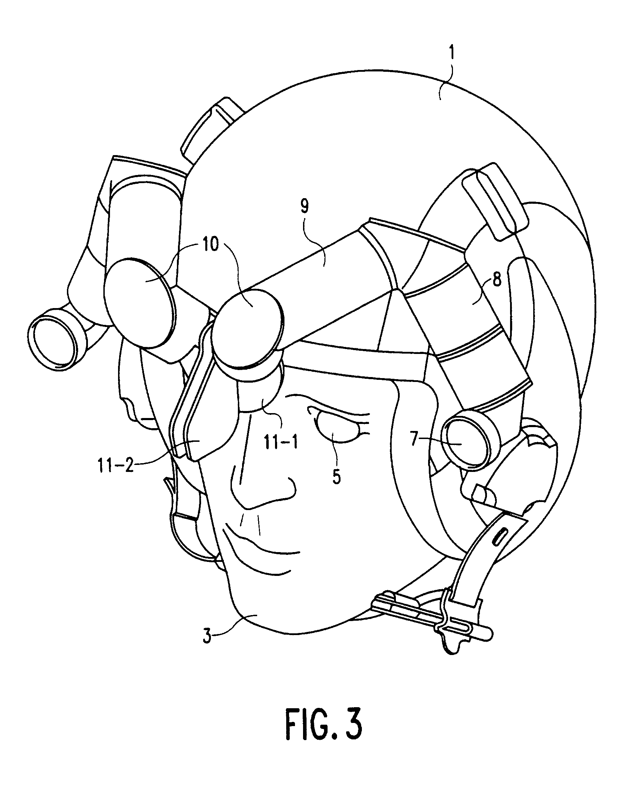

- Figure 3 shows an oblique view of the embodiment of Figure 1, and
- Figures 4 - 7 show views in illustration of the course of the beams for possible embodiments of the imaging system according to the invention.

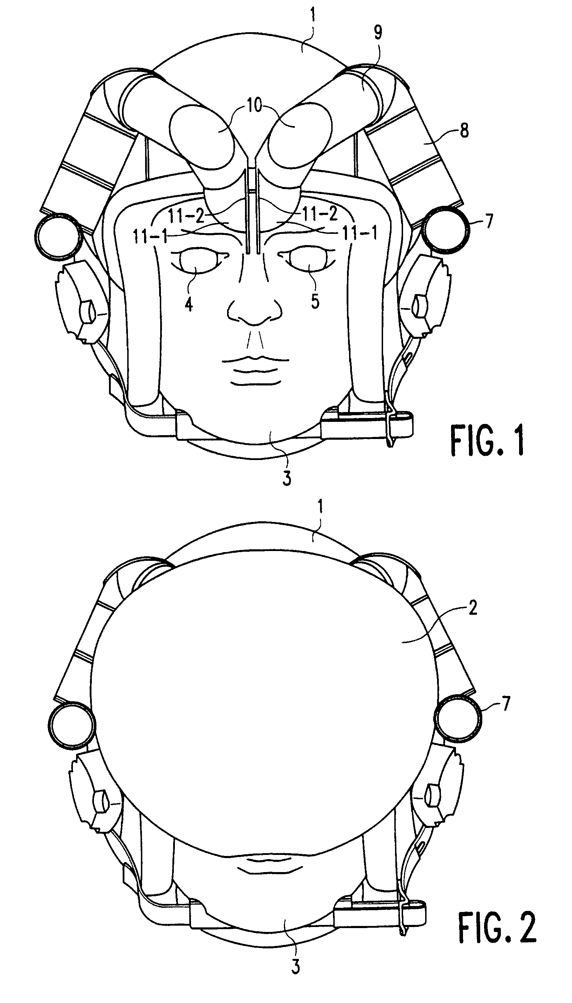

Figure 1 shows a schematic frontal view of a helmet 1, which further consists of a visor 2, which is hingeably and raiseably fitted to helmet 1. When the helmet 1 is put on by a schematically illustrated pilot 3, his right eye 4 and left eye 5 are at the shown locations. The, mostly, curved visor 2 is provided at the inside with an optically reflecting element 6, i.e. an element for the right eye 4 and an element for the left eye 5 of the pilot 3. In order to give the pilot the opportunity to keep any direct view, for as far as is possible, on what is happening in the airspace surrounding him, the element 6 can be transparent and be embodied as a semi-transparent mirror.

In order to allow night vision with the right eye 4, the shown imaging system possesses an information generator projection group with night vision mounted in the right side of the helmet 1, which consists of an objective 7, an image intensifier 8, and a lens group 9. Optical means 10 and 11 project the image coming from the projection group 7, 8 and 9, which in particular is a night image, onto the element 6 located before the right eye 4. A similar projection group is mounted on the left side of the helmet 1 to also collimate a second image via the . corresponding visor component 6 for the left eye 5. The two images possibly form the images of a stereo image. Also other information important for the pilot can be projected on the visor 2 with the aid of other, not explicitly shown, image forming means.

The optical means 10 and 11 comprise mirrors which preferably are mounted on the helmet 1. The mirror 11 is implemented in multiple and comprises mirror pairs 11-1 and 11-2 which are placed under an angle; one pair for each eye of the pilot 3. The mirrors 11-1 are positioned substantially parallel to the forehead of the pilot 3, while the mirrors 11-2 are positioned substantially perpendicular towards the first ones.

The two mirrors 10 reflect the beams coming from the night vision projection group 7, 8, 9 into the direction of the mirror pairs 11-1 and 11-2, which pairs will be explained furtheron, and which in turn form the image on the element 6. Each of the mirror pairs 11-1 and 11-2 forms part of a channel, both channels together forming a stereo image. The shape of the mirrors is flat, curved or they consist of a holographic element for those cases in which the mirror condition, i.e. the angle of incidence of a light beam is equal to the angle of reflection, does not apply.

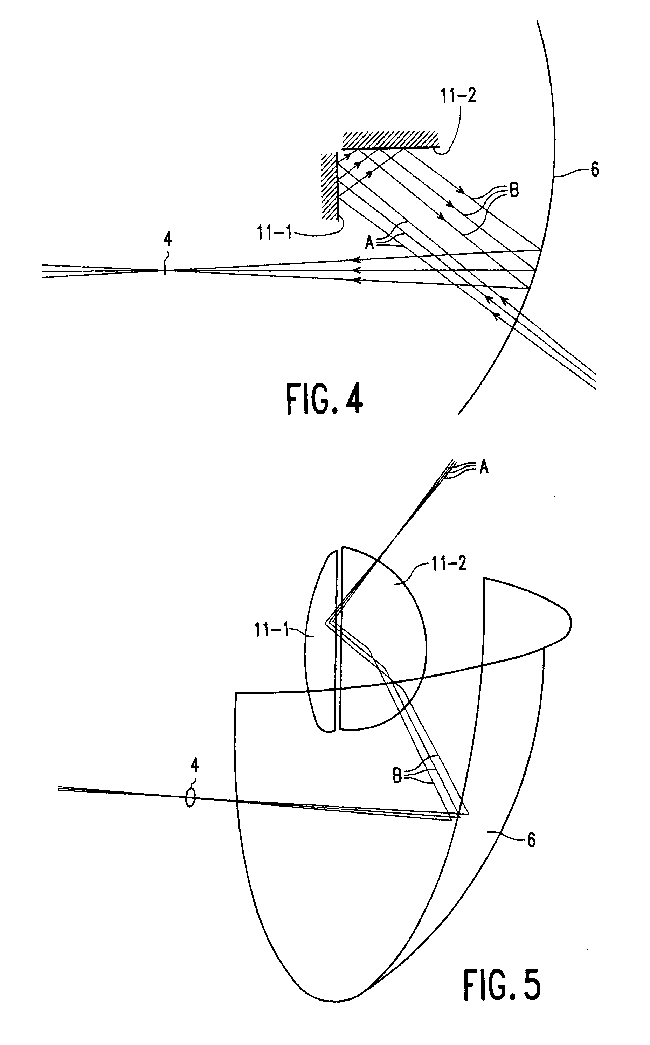

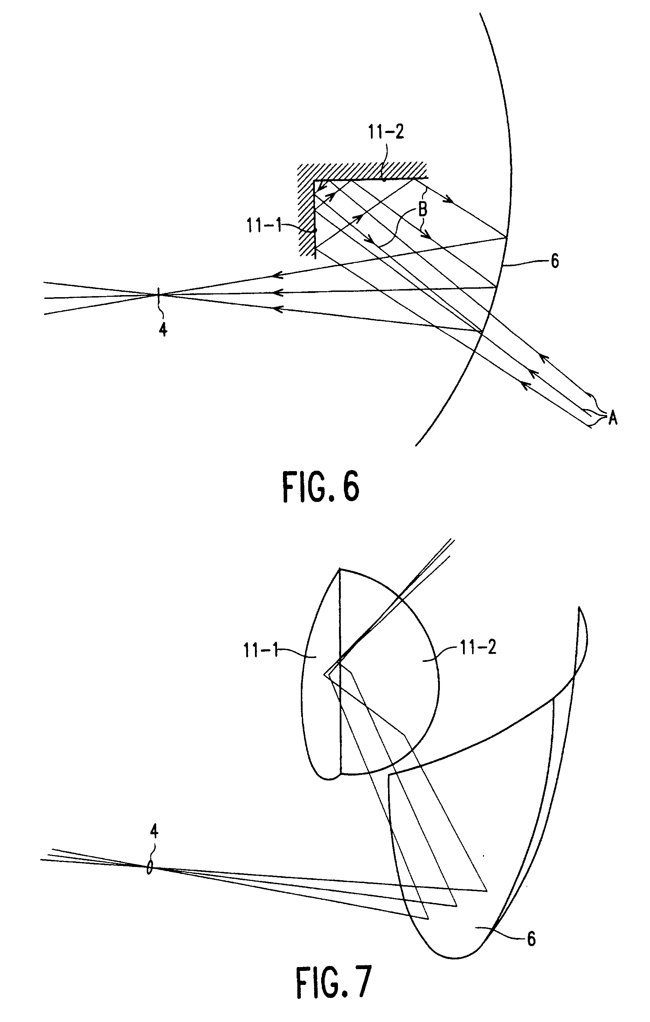

Examples of applying the mirror pairs 11-1 and 11-2 are shown in the figures 4-7. Of these, the figures 4 and 6 show top views, while the figures 5 and 7 show spatial representations of part of the courses of the beams about the multiple reflecting element 10. The beams A coming from the mirror 10, not shown in these figures, hit the first reflecting element 11-1, reflect from there to the second reflecting element 11-2 and thereafter are collimated (beams B) via the optical reflecting element 6, which is located at the inside of the visor 2, to the eye 4. In order to prevent unwanted optical deviations or at least to avoid having to correct these, the beams A and B will mostly run parallel, viewed in a horizontal cross-section, perpendicular to the head-dividing-plane through the head of the helmet bearer which divides the head of the helmet bearer in a left half and a right half (see the figures 4 and 6). In the shown embodiment of figure 6, the combination of reflecting elements 11-1 and 11-2 forms a so called roof top mirror. As shown in the figures 6 and 7, the beams A thereby also can, partly, at first hit the reflecting element 11-2, which is placed substantially perpendicular to the forehead of the helmet bearer, and thereafter be reflected to element 6 via element 11-1.

Preferably, because of the centre of gravity of the complete imaging system and the g-forces to which it can be subjected, the components of the night vision projection group 7, 8, 9 are situated in a plane which runs at least substantially horizontally through both eyes 4, 5 of the helmet bearer.

A compact construction of the imaging system which has few extending components is brought about if the distance in the vertical direction over which the beams radiated by the night vision projection group 7, 8, 9 are deflected by the optical means 10 and 11 is greater than the distance over which the beams are deflected in the horizontal direction. Finally a imaging system is brought about the various parts and components of which are substantially completely outside the field of view of the pilot and which thus substantially do not form any hindrance for his view.

The lens group 9 is constructed such that image errors in the night image observed via the element 6 are corrected.

## Claims

1. Imaging system intended for mounting onto a helmet (1), including:
- at least one image projection group (7, 8, 9) mounted on one side of the helmet (1),
- optical means (10, 11) coupled to the at least one image projection group (7, 8, 9), which are provided with a first (11-1) and a second (11-2) reflecting element, one of which (11-2) is running substantially parallel to the head-dividing-plane through the head of the helmet bearer (3) which divides the head of the helmet bearer in a left half and a right half, and
- a visor (2) provided with a reflecting optical element (6) for displaying an image provided by the at least one image projection group (7, 8, 9) to the eye (4, 5) of the helmet bearer at the one side,
in which system a beam originating from the at least one image projection group on its way to the reflecting optical element on the visor travels in a first direction (A) before reflecting from the first reflecting element (11-1) and travels in a second direction (B) after reflecting from the second reflecting element (11-2),
**characterized in that** as viewed in projection on a plane, perpendicular to the head-dividing-plane, the first (A) and second (B) directions are opposed directions and substantially parallel to each other.

2. Imaging system according to claim 1, **characterized in that** the first and second reflecting elements (11-1, 11-2) are positioned substantially perpendicular to each other.

3. Imaging system according to claim 1 or 2, **characterized in that** the first and second reflecting elements (11-1, 11-2) are connected substantially seamless to each other.

4. Imaging system according to any of the claims 1 to 3, **characterized in that** the first reflecting element (11-1) is positioned substantially parallel to the forehead of the helmet bearer (3).

5. Imaging system according to any of the claims 1 to 4, **characterized in that** the first reflecting element (11-1) is mounted on the helmet (1).

6. Imaging system according to any of the claims 1 to 5, **characterized in that** the at least one image projection group (7, 8, 9) comprises a mirror (10) from which beams (A) are directed to the first reflecting element (11-1).

7. Imaging system according to claim 6, **characterized in that** the mirror (10) is a holographic element.

8. Imaging system according to claim 6 or 7, **characterized in that** the mirror (10) is mounted on the helmet.

9. Imaging system according to any of the claims 1 to 8, **characterized in that** the reflecting optical element (6) is embodied as a transparent reflecting optical element.

10. Imaging system according to claim 9, **characterized in that** the transparent reflecting optical element (6) has a spherical shape.

11. Imaging system according to claim 9 or 10, **characterized in that** the transparent reflecting optical element (6) is a semi-transparent mirror.

12. Imaging system according to any of the claims 1 to 11, **characterized in that** the system comprises two image projection groups (7, 8, 9) mounted on different sides of the helmet (1).

13. Imaging system according to any of the claims 1 to 12, **characterized in that** the at least one image projection group (7, 8, 9) is located in a plane which stretches substantially horizontally through both eyes (4, 5) of the helmet bearer (3).

14. Imaging system according to any of the claims 1 to 13, **characterized in that** the at least one image projection group (7, 8, 9) is located outside the field of view of the helmet bearer (1).

15. Imaging system according to any of the claims 1 to 14, **characterized in that** the at least one image projection group (7, 8, 9) comprises an image intensifier (8).

16. Imaging system according to any of the claims 1 to 15, **characterized in that** the at least one image projection group (7, 8, 9) is provided with image forming means for displaying information via the reflecting optical element.

17. Imaging system according to any of the claims 1 to 16, **characterized in that** the optical means (10, 11) are provided with a lens group which is arranged such that the image errors in the optics are being corrected.

## Patentansprüche

1. Abbildungssystem zur Befestigung an einem Helm (1), mit:
- wenigstens einer an einer Seite des Helms (1) angebrachten Bildprojektionsgruppe (7, 8, 9),
- einer mit der wenigstens einen Bildprojektionsgruppe (7, 8, 9) verbundenen optischen Einrichtung (10, 11), die mit einem ersten (11-1) und einem zweiten reflektierenden Element (11-2) versehen ist, von denen eines (11-2) im wesentlichen parallel zur Kopfteilungsebene durch den Kopf des Helmträgers (3) verläuft, welche den Kopf des Helmträgers in eine linke und eine rechte Hälfte teilt, und
- einem Schirm (2), der mit einem reflektierenden optischen Element (6) zum Anzeigen eines Bildes verbunden ist, das von der wenigstens einen Bildprojektionsgruppe (7, 8, 9) dem Auge (4, 5) des Helmträgers auf der einen Seite zugeleitet wird,
wobei in dem System ein ursprünglich von der wenigstens einen Bildprojektionsgruppe kommender Strahl aufseinem Weg zum reflektierenden optischen Element auf dem Schirm in eine erste Richtung (A) läuft, bevor er vom ersten reflektierenden Element (11-1) reflektiert wird, und in eine zweite Richtung (B) läuft, nachdem er vom zweiten reflektierenden Element (11-2) reflektiert wurde,
**dadurch gekennzeichnet, daß**, in Projektion auf eine senkrecht zur Kopfteilungsebene verlaufende Ebene gesehen, die erste (A) und die zweite Richtung (B) entgegengesetzte und im wesentlichen zueinander parallele Richtungen sind.

2. Abbildungssystem nach Anspruch 1, **dadurch gekennzeichnet, daß** das erste und das zweite reflektierende Element (11-1, 11-2) im wesentlichen senkrecht zueinander positioniert sind.

3. Abbildungssystem nach Anspruch 1 oder 2, **dadurch gekennzeichnet, daß** das erste und zweite reflektierende Element (11-1, 11-2) im wesentlichen nahtlos miteinander verbunden sind.

4. Abbildungssystem nach einem der Ansprüche 1 bis 3, **dadurch gekennzeichnet, daß** das erste reflektierende Element (11-1) im wesentlichen parallel zur Stirn des Helmträgers (3) verläuft.

5. Abbildungssystem nach einem der Ansprüche 1 bis 4, **dadurch gekennzeichnet, daß** das erste reflektierende Element (11-1) am Helm (1) angebracht ist.

6. Abbildungssystem nach einem der Ansprüche 1 bis 5, **dadurch gekennzeichnet, daß** die wenigstens eine Bildprojektionsgruppe (7, 8, 9) einen Spiegel (10) aufweist, von dem Strahlen (A) zum ersten reflektierenden Element (11-1) geleitet werden.

7. Abbildungssystem nach Anspruch 6, **dadurch gekennzeichnet, daß** der Spiegel (10) ein holographisches Element ist.

8. Abbildungssystem nach einem derAnsprüche 6 oder 7, **dadurch gekennzeichnet, daß** der Spiegel (10) am Helm angebracht ist.

9. Abbildungssystem nach einem der Ansprüche 1 bis 8, **dadurch gekennzeichnet, daß** das reflektierende optische Element (6) als transparentes reflektierendes optisches Element ausgebildet ist.

10. Abbildungssystem nach Anspruch 9, **dadurch gekennzeichnet, daß** das transparente reflektierende optische Element (6) sphärisch geformt ist.

11. Abbildungssystem nach Anspruch 9 oder 10, **dadurch gekennzeichnet, daß** das transparente reflektierende optische Element (6) ein halbtransparenter Spiegel ist.

12. Abbildungssystem nach einem derAnsprüche 1 bis 11, **dadurch gekennzeichnet, daß** das System zwei auf verschiedenen Seiten des Helms (1) angebrachte Bildprojektionsgruppen (7, 8, 9) aufweist.

13. Abbildungssystem nach einem der Ansprüche 1 bis 12, **dadurch gekennzeichnet, daß** die wenigstens eine Bildprojektionsgruppe (7, 8, 9) in einer Ebene angeordnet ist, die sich im wesentlichen horizontal durch beide Augen (4, 5) des Helmträgers (3) erstreckt.

14. Abbildungssystem nach einem der Ansprüche 1 bis 13, **dadurch gekennzeichnet, daß** die wenigstens eine Bildprojektionsgruppe (7, 8, 9) außerhalb des Gesichtsfelds des Helmträgers (3) angeordnet ist.

15. Abbildungssystem nach einem der Ansprüche 1 bis 14, **dadurch gekennzeichnet, daß** die wenigstens eine Bildprojektionsgruppe (7, 8, 9) einen Bildverstärker (8) aufweist.

16. Abbildungssystem nach einem derAnsprüche 1 bis 15, **dadurch gekennzeichnet, daß** die wenigstens eine Bildprojektionsgruppe (7, 8, 9) mit einer Bilderstellungseinrichtung zum Anzeigen von Informationen über das reflektierende optische Element versehen ist.

17. Abbildungssystem nach einem derAnsprüche 1 bis 16, **dadurch gekennzeichnet, daß** die optischen Einrichtungen (10, 11) mit einer Linsengruppe versehen sind, die derart angeordnet ist, daß die Abbildungsfehler der Optik korrigiert werden.

## Revendications

1. Système de formation d'image destiné à être monté sur un casque (1), comportant :
au moins un groupe de projection d'image (7, 8, 9) monté sur un côté du casque (1),
des moyens optiques (10, 11) couplés audit au moins un groupe de projection d'image (7, 8, 9), qui sont dotés d'un premier élément réfléchissant (11-1) et d'un deuxième élément réfléchissant (11-2), dont l'un (11-2) s'étend de façon sensiblement parallèle au plan de division de la tête, passant par la tête du porteur (3) du casque, qui divise la tête du porteur du casque en une moitié gauche et une moitié droite, et
un viseur (2) doté d'un élément optique réfléchissant (6) qui sert à afficher une image produite par ledit au moins un groupe de projection d'image (7, 8, 9) sur l'oeil (4,5) du porteur du casque, dudit côté,
dans lequel système un faisceau venant dudit au moins un groupe de projection d'image, sur son trajet qui va à l'élément optique réfléchissant placé sur le viseur, se déplace dans un premier sens (A) avant de se réfléchir sur ledit premier élément réfléchissant (11-1) et se déplace dans un deuxième sens (B) après avoir été réfléchi sur le deuxième élément réfléchissant (11-2),
**caractérisé en ce que**, lorsqu'on regarde en projection sur un plan, perpendiculairement au plan de division de la tête, le premier sens (A) et le deuxième sens (B) sont des sens opposés et sensiblement parallèles entre eux.

2. Système de formation d'image selon la revendication 1, **caractérisé en ce que** les premier et deuxième éléments réfléchissants (11-1, 11-2) sont placés de façon à être sensiblement perpendiculaires l'un à l'autre.

3. Système de formation d'image selon la revendication 1 ou 2, **caractérisé en ce que** les premier et deuxième éléments réfléchissants (11-1, 11-2) sont reliés sensiblement sans joint entre eux.

4. Système de formation d'image selon l'une quelconque des revendications 1 à 3, **caractérisé en ce que** le premier élément réfléchissant (11-1) est disposé de façon sensiblement parallèle au front du porteur (3) du casque.

5. Système de formation d'image selon l'une quelconque des revendications 1 à 4, **caractérisé en ce que** le premier élément réfléchissant (11-1) est monté sur le casque (1).

6. Système de formation d'image selon l'une quelconque des revendications 1 à 5, **caractérisé en ce que** ledit au moins un groupe de projection d'image (7, 8, 9) comprend un miroir (10) depuis lequel des faisceaux (A) sont dirigés sur ledit premier élément réfléchissant (11-1).

7. Système de formation d'image selon la revendication 6, **caractérisé en ce que** le miroir (10) est un élément holographique.

8. Système de formation d'image selon la revendication 6 ou 7, **caractérisé en ce que** le miroir (1) est monté sur le casque.

9. Système de formation d'image selon l'une quelconque des revendications 1 à 8, **caractérisé en ce que** l'élément optique réfléchissant (6) est réalisé sous la forme d'un élément optique réfléchissant transparent.

10. Système de formation d'image selon la revendication 9, **caractérisé en ce que** l'élément optique réfléchissant transparent (6) possède une forme sphérique.

11. Système de formation d'image selon la revendication 9 ou 10, **caractérisé en ce que** l'élément optique réfléchissant transparent (6) est un miroir semi-transparent.

12. Système de formation d'image selon l'une quelconque des revendications 1 à 11, **caractérisé en ce que** le système comprend deux groupes de projection d'image (7, 8, 9) monté sur des côtés différents du casque (1).

13. Système de formation d'image selon l'une quelconque des revendications 1 à 12, **caractérisé en ce que** ledit au moins un groupe de projection d'image (7, 8, 9) est placé dans un plan qui passe de façon sensiblement horizontale par les deux yeux (4, 5) du porteur (3) du casque.

14. Système de formation d'image selon l'une quelconque des revendications 1 à 13, **caractérisé en ce que** ledit au moins un groupe de projection d'image (7, 8, 9) est placé à l'extérieur de l'angle de vision du porteur du casque (1).

15. Système de formation d'image selon l'une quelconque des revendications 1 à 14, **caractérisé en ce que** ledit au moins un groupe de projection d'image (7, 8, 9) comprend un intensificateur d'image (8).

16. Système de formation d'image selon l'une quelconque des revendications 1 à 15, **caractérisé en ce que** ledit au moins un groupe de projection d'image (7, 8, 9) est doté d'un moyen de formation d'image servant à afficher des informations via l'élément optique réfléchissant.

17. Système de formation d'image selon l'une quelconque des revendications 1 à 16, **caractérisé en ce que** les moyens optiques (10, 11) sont dotés d'un groupe de lentilles qui est conçu de façon que les erreurs de l'image intervenant dans l'optique soient corrigées.
